# EUROPÄISCHE PATENTSCHRIFT

(11) **EP 3 827 891 B1**
(45) Veröffentlichungstag und Bekanntmachung des Hinweises auf die Patenterteilung: **16.02.2022**
(21) Anmeldenummer: 19212218.2
(22) Anmeldetag: 28.11.2019
(51) Int. Cl.: B01D 46/00, B01D 46/10, B01D 46/42, B01D 46/44, B01D 46/50, B01D 46/52

(54) **FILTERELEMENT MIT LEITFÄHIGEM KANTENBAND UND FILTERANORDNUNG MIT EINEM SOLCHEN FILTERELEMENT**
FILTER ELEMENT WITH CONDUCTIVE EDGE BAND AND FILTER ARRANGEMENT COMPRISING SUCH A FILTER ELEMENT
ÉLÉMENT FILTRANT AVEC BANDE DE BORD CONDUCTRICE ET DISPOSITIF DE FILTRAGE COMPRENANT UN TEL ÉLÉMENT FILTRANT

(43) Veröffentlichungstag der Anmeldung: 02.06.2021
(73) Patentinhaber: Carl Freudenberg KG, 69469 Weinheim (DE)
(72) Erfinder: OELSNER, Alexander, 68309 Mannheim (DE); Stahl, Ulrich, 69514 Laudenbach (DE); Capuani, Peter, 69483 Waldmichelbach (DE); Staudenmayer, Oliver, 69469 Weinheim (DE); De Angelis, Gennaro, 68519 Viernheim (DE)

(56) Entgegenhaltungen:
- DE-A1-102010 044 258
- US-A- 3 933 643
- US-A1- 2011 048 238

## Beschreibung

Die Erfindung betrifft ein Filterelement gemäß dem Oberbegriff von Anspruch 1 und eine Filteranordnung gemäß Anspruch 10.

### Stand der Technik

Aus dem Stand der Technik sind zahlreiche Lösungen zur Filtration von Fluidströmen bekannt. Häufig kommen dabei plissierte Filtermedien zum Einsatz. Die EP 3 332 858 A1 zeigt ein Filterelement mit einem mit Falten versehenen Filtermedium, welches also plissiert ist, und einen Faltenbalg bildet. An seinen seitlichen Flächen ist der Faltenbalg mit einem Kantenband versehen.

Die DE 10 2010 044 258 A1 zeigt ein Filterelement, dessen Seitenstreifen aus einem karbonisierten Vliesstoff gefertigt sind.

Weiterhin bekannt ist es die Filtrationsleistung von Filtern zu erhöhen durch den Einsatz von Einheiten zur Ionisierung von Partikeln in der zu reinigenden Luft. Dazu werden lonisierungselektroden zur Ionisierung stromaufwärtig des Filters angeordnet. Abscheideelektroden werden direkt auf den Faltenbalg des Filters aufgebracht, beispielsweise durch die Verwendung von metallischen Gittern oder Beschichtungen. Eine derartige Filteranordnung ist beispielsweise in der US 7,008,469 B2 dargestellt und beschrieben.

Das Vorsehen von elektrisch leitfähigen Drähten oder Beschichtungen auf dem Faltenbalg ist aufwändig und teuer. Auch kann die zur Staubfiltration zur Verfügung stehende Fläche verringert werden.

Weiter nachteilig ist, dass für die Steuerungselektronik der lonisierungselektroden in dem Luftkanal Bauraum zu Verfügung gestellt werden muss. Auf Grund von üblicher Weise beengten Verhältnissen in Luftkanälen ist dann eine Wartung oder eine Nachrüstung nur schwierig möglich.

### Aufgabenstellung

Aufgabe der vorliegenden Erfindung ist es ein Filterelement zu schaffen, bei welchem eine elektronische Einheit einfach direkt mit dem Faltenbalg des Filterelements verbunden werden kann.

Weitere Aufgabe ist es, eine kompakte Filteranordnung zu schaffen, welche eine elektronische Einheit aufweist.

### Technische Lösung

Gelöst wird diese Aufgabe durch ein Filterelement mit den Merkmalen von Anspruch 1.

Erfindungsgemäß wurde als vorteilhaft erkannt, ein elektrisch leitfähiges Kantenband zu verwenden:
Das erfindungsgemäße Filterelement dient der Filtration eines Fluidstromes.
Das Filterelement weist ein einen Faltenbalg bildendes, mit Falten versehenes, insbesondere plissiertes Filtermedium auf, wobei eine Mehrzahl von Faltkanten und zwischen den Faltkanten liegenden Faltflächen ausgebildet werden. Der Faltenbalg ist, zumindest an einer sich nicht in Richtung der Falten erstreckenden Seitenflächen, mit mindestens einem Kantenband versehen und stoffschlüssig verbunden und zwar derart, dass das mindestens eine Kantenband an den Endkanten von Faltflächen anliegt. Eine bevorzugte Verbindung erfolgt durch Verkleben. Alternative Begriffe für "Kantenband" sind auch "Seitenstreifen" oder "Kantenstreifen" oder "Seitenteil". Das Kantenband ist ein Band bzw. ein Streifen bzw. eine Platte aus einem flächigen Material.
Das Filtermedium ist mindestens zweilagig aufgebaut und besitzt mindestens eine Partikelfilterlage und mindestens eine elektrisch leitfähige Filterlage, insbesondere eine Adsorptionsfilterlage zur Gasadsorption. Die Partikelfilterlage kann insbesondere aus Vliesstoff gefertigt sein. Vliesstoff hat den Vorteil, dass es sich um ein leichtes Material mit guten Filtrations- und
Fertigungseigenschaften handelt. Elektrische Leitfähigkeit der Filterlage meint dabei nicht, dass eine so gute Leitfähigkeit, wie zum Beispiel bei Kupfer oder anderen Metallen bestehen muss. Damit eine ausreichende elektrische Leitfähigkeit der Filterlage besteht, kann der Faltenbalg einen elektrischen Widerstand im Bereich von 1 bis 90 MOhm (1 bis 90 Mega Ohm, also 1.000.000 bis 90.000.000 Ohm) aufweisen.

Erfindungsgemäß ist mindestens ein weiteres Kantenband mit einer anderen Außenseite des Faltenbalgs stoffschlüssig verbunden, insbesondere verklebt, und zwar derart, dass das mindestens eine weitere Kantenband an den Endkanten von Faltflächen anliegt. Deshalb wird dieses Element ebenfalls als Kantenband bezeichnet. Das mindestens eine weitere Kantenband ist dabei elektrisch leitfähig ausgestaltet. Auch hier wird unter elektrischer Leitfähigkeit nicht verstanden, dass eine so gute Leitfähigkeit wie bei Kupfer oder anderen Metallen bestehen muss. Damit eine ausreichende elektrische Leitfähigkeit des mindestens einen weiteren Kantenbandes besteht, kann das mindestens eine weitere Kantenband einen elektrischen Widerstand im Bereich von 10 bis 25MOhm aufweisen. Die Messung des elektrischen Widerstandes von Faltenbalg und Kantenband kann wie üblich mit einem Widerstandsmessgerät, ausgeführt als Multimeter mit Strom- und Spannungsmessung, erfolgen. Der Widerstand kann dabei an der Diagonale mit der größten Erstreckung von Faltenbalg (in der Draufsicht) und Kantenband (in der Ansicht) gemessen werden.

Das mindestens eine weitere Kantenband ist elektrisch leitfähig mit der elektrisch leitfähigen Filterlage verbunden. Durch das Vorsehen eines solchen leitfähigen Kantenbandes wird eine einfache Möglichkeit zum elektrisch leitfähigen Verbinden einer elektronischen Einheit mit dem Faltenbalg des Filterelements ermöglicht.

Das Filterelement kann so in vorteilhafter Weise funktionales Bauteil eines elektrischen Stromkreises sein, wodurch ein direkter Stromfluss vom Filterelement zu einer elektronischen Einheit ermöglicht wird.

Beim erfindungsgemäßen Filterelement ist das mindestens eine weitere Kantenband so ausgeformt, dass es eine zu mindestens einer Seite hin geöffnete Tasche ausbildet. In diese Tasche ist ein plattenförmiges Element einsteckbar, zum Beispiel ein Schwert. Anstelle von einer Tasche könnte auch von einer Lasche gesprochen werden, wenn Öffnungen zu zwei Seiten vorliegen. Insbesondere kann die Tasche eine V-förmige Öffnung aufweisen. Ein plattenförmiges Element lässt sich dann besonders einfach in die Tasche einstecken. Durch das Vorsehen einer solchen Tasche wird eine einfache Möglichkeit zum mechanischen Verbinden einer elektronischen Einheit mit dem Faltenbalg ermöglicht. Ein plattenförmiges Element kann so formschlüssig in der Tasche aufgenommen und gehalten werden.

Besonders vorteilhaft ist es, dass die Tasche zur Anströmseite, das heißt zur Rohgasseite des Faltenbalgs, oder zur Abströmseite, das heißt zur Reingasseite des Faltenbalgs hin geöffnet ist. Zu diesen Seiten hin hat die Tasche ihre größte Erstreckung, so dass ein besonders einfaches Einführen eines plattenförmigen Elementes ermöglicht wird. Beim Einbau und Ausbau des Filterelements in einer Filteraufnahme kann ein plattenförmiges Element gut in der Tasche gehalten werden.

Alternativ - in einer nicht zur Erfindung gehörigen Variante - könnte die Tasche auch mit einer seitlichen Öffnung versehen sein, sodass das plattenförmiges Element seitlich eingeschoben werden kann, in etwa rechtwinklig zur Durchströmungsrichtung.

In Weiterbildungen kann die Tasche unterteilt sein und mehrere Teiltaschen aufweisen. Dadurch kann ein besserer Formschluss zwischen der Tasche und einem einzusteckenden plattenförmigen Element realisiert werden.

In Weiterbildungen des erfindungsgemäßen Filterelements ist das mindestens eine weitere Kantenband mit dem Faltenbalg verklebt. Insbesondere kann die Verklebung aus einem elektrisch leitfähigen Klebstoff bestehen. Dann wird die elektrische Verbindung zwischen dem mindestens einen weiteren Kantenband und der elektrisch leitfähigen Filterlage durch den elektrisch leitfähigen Klebstoff bewirkt. Elektrische Leitfähigkeit wird dabei wie bereits obenstehend ausgeführt verstanden.

Bei Versuchen wurde herausgefunden, dass es besonders vorteilhaft ist, wenn das mindestens eine weitere Kantenband aus einem elektrisch leitfähigen Vliesstoff besteht, insbesondere einem Polyester-Vliesstoff, welcher mit einem elektrisch leitfähigen Material beschichtet ist.

Alternativ kann das mindestens eine weitere Kantenband aus einem mindestens zweilagigen Filtermedium bestehen mit mindestens einer Partikelfilterlage und einer elektrisch leitfähigen Filterlage.

In vorteilhafter Ausgestaltung des erfindungsgemäßen Filterelements ist die elektrisch leitfähige Filterlage als Adsorptionsfilterlage zu Gasadsorption ausgestaltet und weist insbesondere Aktivkohle auf und besitzt ein Flächengewicht von 100 bis 600 g/m² und eine Materialdicke von 0,7 bis 3,5mm.

In vorteilhafter Weiterbildung des erfindungsgemäßen Filterelements weist der Faltenbalg des Filterelements eine Einbuchtung auf und das mindestens eine weitere Kantenband ist im Bereich der Einbuchtung an dem Faltenbalg befestigt und schließt den Faltenbalg zur Seite hin ab. Unter Einbuchtung wird hier eine Abweichung der Außenform des Faltenbalgs von der geometrischen Grundform verstanden. Zum Beispiel eine Abweichung von einer insbesondere rechteckigen oder trapezförmigen Grundform. Die Draufsicht auf die Einbuchtungen kann insbesondere die Form eines Dreiecks aufweisen.

In anderen Worten: Durch die Einbuchtung wird direkt angrenzend an den Faltenbalg Raum geschaffen, in welchem sich kein Filtermedium befindet und welcher von einer anderen Einheit ausgefüllt werden kann, beispielsweise von einer elektronischen Einheit, welche dem Filterelement zugeordnet ist. Bei einem derartigen Filterelement mit Einbuchtung des Faltenbalgs wird eine besonders kompakte Integration einer elektronischen Einheit in die Filteranordnung ermöglicht, wenn sich die elektronische Einheit in dem Volumen der Einbuchtung befindet. Auch wird so eine Nachrüstung mit einer elektronischen Einheit ermöglicht, ohne dass die Abmaße des das Filterelement aufnehmenden Filterkanals geändert werden müssten.

Die Erfindung betrifft auch eine Filteranordnung mit einem wie vorstehend beschriebenen Filterelement und mit einer elektronischen Einheit, wobei die elektronische Einheit ein plattenförmiges Schwert aus elektrisch leitfähigem Material, zum Beispiel einem Metall besitzt, welches komplementär zu der Tasche ausgeformt ist und formschlüssig in der Tasche gehalten wird. Dank dieser Ausgestaltung ist das Filterelement ein funktionales Bauteil eines elektrischen Stromkreises.

In vorteilhafter Weiterbildung der erfindungsgemäßen Filteranordnung weist der Faltenbalg des Filterelements eine Einbuchtung auf und die elektronische Einheit ist komplementär zu der Einbuchtung ausgeformt und in der Einbuchtung positioniert. In anderen Worten: Die Abmaße der Einbuchtung und die Abmaße der elektronischen Einheit stimmen nahezu überein, so dass das Volumen der Einbuchtung durch das Volumen der elektronischen Einheit eingenommen wird.

In vorteilhafter Weiterbildung der erfindungsgemäßen Filteranordnung handelt es sich bei der elektronischen Einheit um eine lonisierungseinheit, eine Sensoreinheit oder eine Temperiereinheit.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Die erfindungsgemäße Filteranordnung kann insbesondere als Innenraum-Luftfilter in Fahrzeugen, wie z.B. Autos, PKW, NKW, Zügen, Fluggeräten oder Schiffen verwendet werden.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Draufsicht auf eine erfindungsgemäße Filteranordnung
- Fig. 2: eine Schnittdarstellung einer erfindungsgemäße Filteranordnung
- Fig. 3: ein Schnitt durch ein Filtermedium
- Fig. 4: eine Ansicht des erfindungsgemäße Filterelements
- Fig. 5: vier verschiedene Ausgestaltungen von komplementär zueinander ausgeformten Taschen und Schwertern

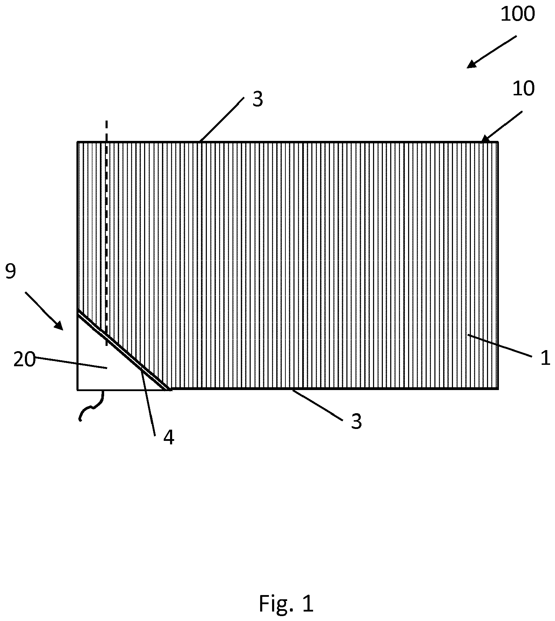

Figur 1 zeigt eine Filteranordnung 100 in einer Draufsicht. Die Filteranordnung 100 besitzt ein Filterelement 10 und eine elektronische Einheit 20, welche direkt angrenzend zueinander angeordnet sind. Die elektronische Einheit 20 ist in der Figur nur angedeutet und nicht mit allen ihren Elementen im Detail dargestellt. Das Filterelement 10 besitzt einen Faltenbalg 1 aus einem vielfach gefalteten Filtermedium 2. An zwei Seiten des Faltenbalgs 1 ist jeweils ein Kantenband 3 stoffschlüssig mit der Außenseite des Faltenbalgs 1 verbunden, nämlich verklebt, und zwar derart, dass das jeweilige Kantenband 3 an den Endkanten von Faltflächen des Faltenbalgs anliegt. Zusätzlich zu diesen auch aus dem Stand der Technik bekannten Kantenbändern 3 ist zusätzlich ein weiteres, elektrisch leitfähiges Kantenband 4 vorgesehen, welches ebenfalls stoffschlüssig mit einer anderen Außenseite des Faltenbalgs 1 verbunden ist, nämlich verklebt, und zwar derart, dass das mindestens eine weitere Kantenband 4 ebenfalls an den Endkanten von Faltflächen des Faltenbalgs 1 anliegt. Der Faltenbalg 1 besitzt eine Einbuchtung 9 in Form eines Dreiecks, nämlich einen Bereich, welcher eine Abweichung von der rechteckigen Grundform der Außenkanten des Faltenbalgs 1 darstellt. Im Volumen, welches durch die Einbuchtung 9 gebildet wird, wird die elektronische Einheit 20 aufgenommen.

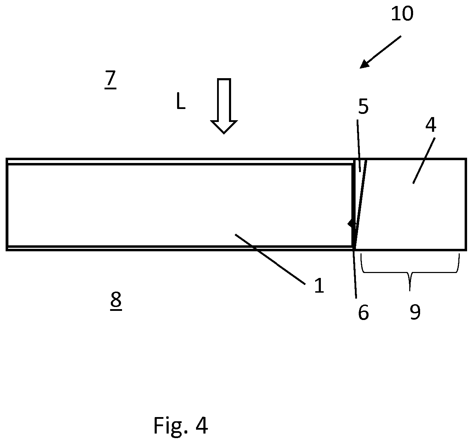

Eine Schnittdarstellung durch das Filterelement 10 an der mit einer gestrichelten Linie in Figur 1 angegebenen Stelle ist in Figur 4 gezeigt.

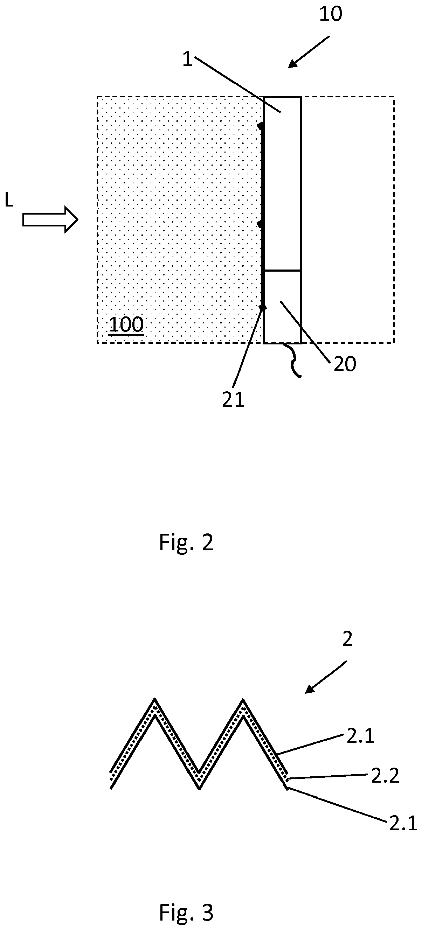

In Figur 2 ist die Filteranordnung 100 in einer seitlichen Ansicht dargestellt. Die elektronische Einheit 20 ist als lonisierungseinheit ausgeführt und besitzt eine lonisierungselektrode 21, welche auf der Rohgasseite des Filterelements 10 angeordnet ist, zur Ionisierung eines zu reinigenden Luftstroms L. Die Abscheideelektrode der lonisierungseinheit wird durch die elektrisch leitfähige elektrisch leitfähigen Filterlage 2.2 des Faltenbalgs 1 gebildet; eine separate Abscheideelektrode ist nicht erforderlich. Daher ist ein besonders kompakter Aufbau der Filteranordnung 100 mit Ionisierungseinheit 20 realisiert.

Der Aufbau des Filtermediums 2, welches den Faltenbalg 1 bildet, ist in Figur 3 dargestellt. Das Filtermedium 2 weist mehrere Lagen auf, nämlich eine Partikelfilterlage 2.1, eine elektrisch leitfähige Filterlage 2.2 und eine weitere Partikelfilterlage 2.1, wobei sich die elektrisch leitfähige Filterlage 2.2 zwischen den Partikelfilterlagen 2.1 befindet und somit durch diese geschützt wird. Die elektrisch leitfähige Filterlage 2.2 ist z.B. als Adsorptionsfilterlage ausgebildet und weist beispielsweise Aktivkohle auf, sodass sie zur Gasadsorption geeignet ist.

Figur 4 zeigt eine Schnittdarstellung durch das Filterelement 10, an der mit einer gestrichelten Linie in Figur 1 angegebenen Stelle. Der Faltenbalg 1 des Filterelements 10 wird von einem Luftstrom L von der Anströmseite 7 (Rohgasseite) zur Abströmseite 8 (Reingasseite) durchströmt und dabei gefiltert. Mit dem Faltenbalg 1 ist durch eine Verklebung 6 das weitere, elektrisch leitfähige Kantenband 4 verbunden. Die Verklebung 6 kann dabei durch einen elektrisch leitfähigen Klebstoff realisiert sein. Das weitere, elektrisch leitfähige Kantenband 4 bildet eine Tasche 5 aus, welche hier V-förmig ausgestaltet ist und zur Anströmseite 7 hin geöffnet ist. Durch die Öffnung der Tasche 5 kann ein plattenförmiges Schwert 22 (hier nicht dargestellt) in die elektronische Einheit 20 eingeführt werden, um die elektronische Einheit 20 mit dem Filterelement 10 elektrisch leitend zu verbinden.

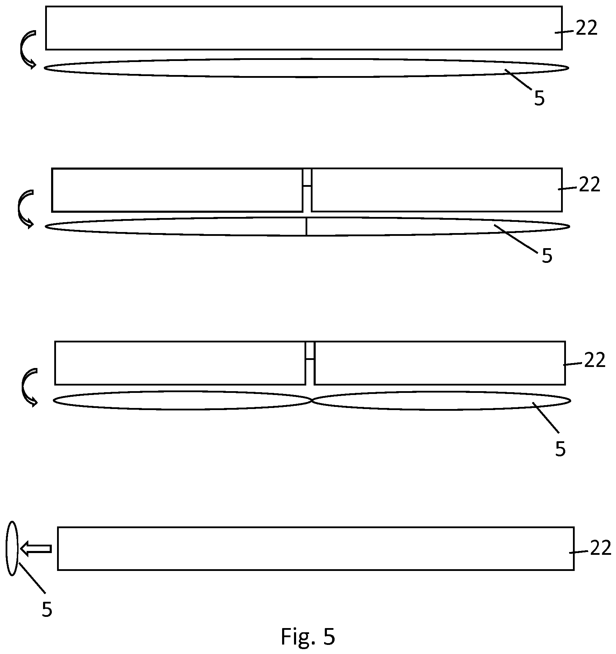

Mögliche Ausgestaltungen der Tasche 5 sind in den verschiedenen Varianten von Figur 5 dargestellt. Gemäß der obersten Variante ist eine Tasche 5 mit einer Öffnung vorgesehen. Gemäß der zweiten Variante besitzt die Tasche 5 einen etwa mittig angeordneten Trennsteg und damit zwei Taschen. In der dritten Variante wird die Tasche 5 durch zwei separate Teiltaschen gebildet. Denkbar ist jedoch auch, dass eine größere Anzahl von Teiltaschen ausgebildet wird. Während in den verschiedenen Varianten gemäß Figur 5 die Taschen 5 jeweils in einer Draufsicht dargestellt sind, sind zugehörige Schwerter 22 jeweils in einer Ansicht dargestellt. Durch die Pfeile wird angedeutet, dass ein jeweiliges Schwert 22 in eine jeweilige Tasche 5 eingeschoben werden kann. Die Schwerter 22 weisen dabei jeweils eine Form auf, welche komplementär zur Form der Taschen 5 ist. Dadurch wird sichergestellt, dass die Schwerter 22 sowohl einfach in die Taschen 5 eingeführt werden können als auch gut in den Taschen 5 gehalten werden.

Alternativ kann gemäß der untersten, nicht erfindungsgemässen Variante die Tasche 5 auch mit einer seitlichen Öffnung versehen sein, sodass das Schwert 22 seitlich eingeschoben werden kann.

### Bezugszeichenliste

- 1: Faltenbalg
- 2: Filtermedium
- 2.1: Partikelfilterlage
- 2.2: elektrisch leitfähige Filterlage, z.B. Adsorptionsfilterlage
- 3: Kantenband
- 4: weiteres, elektrisch leitfähiges Kantenband
- 5: Tasche
- 6: Verklebung
- 7: Anströmseite (Rohgasseite)
- 8: Abströmseite (Reingasseite)
- 9: Einbuchtung

- 10: Filterelement
- 20: Elektronische Einheit
- 21: lonisierungselektrode
- 22: Schwert

- 100: Filteranordnung

- L: Luftstrom

## Patentansprüche

1. Filterelement (10) zur Filtration eines Luftstroms (L) mit einem einen Faltenbalg (1) bildenden gefalteten Filtermedium (2), wobei das Filtermedium (2) mindestens zweilagig aufgebaut ist und eine Partikelfilterlage (2.1) und eine elektrisch leitfähige Filterlage (2.2) besitzt und mit mindestens einem Kantenband (3), wobei das Kantenband (3) mit mindestens einer Außenseite des Faltenbalgs (1) verbunden ist, wobei
mindestens ein weiteres Kantenband (4) mit einer Außenseite des Faltenbalgs (1) verbunden ist, wobei das mindestens eine weitere Kantenband (4) elektrisch leitfähig ist**dadurch gekennzeichnet, dass** das mindestens eine weitere Kantenband (4) eine zur Anströmseite (7) oder zur Abströmseite (8) des Faltenbalgs (1) hin geöffnete Tasche (5) ausbildet.

2. Filterelement nach Anspruch 1, **dadurch gekennzeichnet, dass** die Tasche (5) unterteilt ist und mehrere Teiltaschen aufweist.

3. Filterelement nach einem der vorangehenden Ansprüche **dadurch gekennzeichnet, dass**
das mindestens eine weitere Kantenband (4) mit dem Faltenbalg (1) verklebt ist.

4. Filterelement nach Anspruch 3 **dadurch gekennzeichnet, dass** die Verklebung (6) aus einem elektrisch leitfähigen Klebstoff besteht.

5. Filterelement nach einem der vorangehenden Ansprüche **dadurch gekennzeichnet, dass**
das mindestens eine weitere Kantenband (4) aus einem elektrisch leitfähigen Vliesstoff, insbesondere einem synthetischen Polymer ist.

6. Filterelement nach einem der Ansprüche 1 bis 4 **dadurch gekennzeichnet, dass**
das mindestens eine weitere Kantenband (4) aus einem mindesten zweilagigen Filtermedium (2) besteht mit einer Partikelfilterlage (2.1) und einer elektrisch leitfähigen Filterlage (2.2).

7. Filterelement nach einem der vorangehenden Ansprüche **dadurch gekennzeichnet, dass**
die elektrisch leitfähige Filterlage (2.2) als Adsorptionsfilterlage zur Gasadsorption ausgebildet ist.

8. Filterelement nach Anspruch 7 **dadurch gekennzeichnet, dass** die Adsorptionsfilterlage Aktivkohle aufweist.

9. Filterelement nach einem der vorangehenden Ansprüche **dadurch gekennzeichnet, dass**
der Faltenbalg (1) eine Einbuchtung (9) aufweist und das mindestens eine weitere Kantenband (4) im Bereich der Einbuchtung (9) an dem Faltenbalg (1) befestigt ist und den Faltenbalg (1) abschließt.

10. Filteranordnung (100) mit einem Filterelement (10) nach einem der vorangehenden Ansprüche und mit einer elektronischen Einheit (20), wobei die elektronische Einheit (20) ein Schwert (22) aus elektrisch leitfähigem Material besitzt, welches komplementär zu der Tasche (5) ausgebildet ist und formschlüssig in der Tasche (5) gehalten wird.

11. Filteranordnung nach Anspruch 10 mit einem Filterelement nach Anspruch 9
**dadurch gekennzeichnet, dass** die elektronische Einheit (20) komplementär zu der Einbuchtung (9) ausgeformt und in der Einbuchtung (9) positioniert ist.

12. Filteranordnung nach Anspruch 10 oder 11 **dadurch gekennzeichnet, dass** die elektronische Einheit (20) als lonisierungseinheit, Sensoreinheit oder Temperiereinheit ausgebildet ist.

## Claims

1. Filter element (10) for the filtration of an air stream (L), with a folded filter medium (2) forming a bellows (1), the filter medium (2) being made up of at least two layers and having a particle filter layer (2.1) and an electrically conductive filter layer (2.2), and with at least one edge band (3), the edge band (3) being connected to at least an outer side of the bellows (1), at least one further edge band (4) being connected to an outer side of the bellows (1), the at least one further edge band (4) being electrically conductive, **characterized in that** the at least one further edge band (4) forms a pocket (5) that is open towards the inflow side (7) or the outflow side (8) of the bellows (1).

2. Filter element according to Claim 1, **characterized in that**
the pocket (5) is subdivided and comprises multiple sub-pockets.

3. Filter element according to one of the preceding claims, **characterized in that** the at least one further edge band (4) is adhesively bonded to the bellows (1).

4. Filter element according to Claim 3, **characterized in that**
the adhesive bond (6) consists of an electrically conductive adhesive.

5. Filter element according to one of the preceding claims, **characterized in that**
the at least one further edge band (4) is of an electrically conductive nonwoven, in particular a synthetic polymer.

6. Filter element according to one of Claims 1 to 4, **characterized in that**
the at least one further edge band (4) consists of an at least two-layer filter medium (2), with a particle filter layer (2.1) and an electrically conductive filter layer (2.2).

7. Filter element according to one of the preceding claims, **characterized in that**
the electrically conductive filter layer (2.2) is formed as an adsorption filter layer for gas adsorption.

8. Filter element according to Claim 7, **characterized in that**
the adsorption filter layer comprises activated carbon.

9. Filter element according to one of the preceding claims, **characterized in that**
the bellows (1) has an indentation (9) and the at least one further edge band (4) is fastened to the bellows (1) in the region of the indentation (9) and finishes off the bellows (1).

10. Filter assembly (100) with a filter element (10) according to one of the preceding claims and with an electronic unit (20), the electronic unit (20) having a tongue (22) of electrically conductive material, which is formed to complement the pocket (5) and is held in a form-fitting manner in the pocket (5).

11. Filter assembly according to Claim 10 with a filter element according Claim 9,
**characterized in that** the electronic unit (20) is formed to complement the indentation (9) and is positioned in the indentation (9).

12. Filter assembly according to Claim 10 or 11, **characterized in that** the electronic unit (20) is formed as an ionizing unit, a sensor unit or a temperature-control unit.

## Revendications

1. Élément filtrant (10) destiné à filtrer un flux d'air (L) et comprenant un milieu filtrant plissé (2) formant un soufflet (1), le milieu filtrant (2) étant structuré en au moins deux couches et possédant une couche formant filtre à particules (2.1), une couche formant filtre électriquement conducteur (2.2) et au moins une bande de bord (3), la bande de bord (3) étant reliée à au moins un côté extérieur du soufflet (1), au moins une autre bande de bord (4) étant reliée au côté extérieur du soufflet (1), l'au moins une autre bande de bord (4) étant électriquement conductrice, **caractérisé en ce que** l'au moins une autre bande de bord (4) forme une poche (5) ouverte vers le côté entrée (7) ou le côté sortie (8) du soufflet (1).

2. Élément filtrant selon la revendication 1, **caractérisé en ce que** la poche (5) est subdivisée et comporte plusieurs sous-poches.

3. Élément filtrant selon l'une des revendications précédentes, **caractérisé en ce que**
l'au moins une autre bande de bord (4) est collée au soufflet (1).

4. Élément filtrant selon la revendication 3, **caractérisé en ce que**
la liaison par collage (6) comprend une colle électriquement conductrice.

5. Élément filtrant selon l'une des revendications précédentes, **caractérisé en ce que**
l'au moins une autre bande de bord (4) étant en non-tissé électriquement conducteur, en particulier en polymère synthétique.

6. Élément filtrant selon l'une des revendications 1 à 4, **caractérisé en ce que**
l'au moins une autre bande de bord (4) comprend un milieu filtrant (2) à au moins deux couches pourvu d'une couche formant filtre à particules (2.1) et une couche formant filtre électriquement conducteur (2.2).

7. Élément filtrant selon l'une des revendications précédentes, **caractérisé en ce que**
la couche formant filtre électriquement conducteur (2.2) est conçue comme une couche formant filtre adsorbant destinée à l'adsorption de gaz.

8. Élément filtrant selon la revendication 7, **caractérisé en ce que** la couche formant filtre adsorbant comporte du charbon actif.

9. Élément filtrant selon l'une des revendications précédentes, **caractérisé en ce que**
le soufflet (1) comporte une échancrure (9) et l'au moins une autre bande de bord (4) est fixée au soufflet (1) dans la zone de l'échancrure (9) et ferme le soufflet (1).

10. Ensemble de filtration (100) comprenant un élément filtrant (10) selon l'une des revendications précédentes et une unité électronique (20), l'unité électronique (20) comportant une lame (22) en matériau électriquement conducteur qui est conçue pour être complémentaire de la poche (5) et qui est maintenue dans la poche (5) par complémentarité de formes.

11. Ensemble de filtration selon la revendication 10 comprenant un élément filtrant selon la revendication 9,
**caractérisé en ce que** l'unité électronique (20) est de forme complémentaire à celle de l'échancrure (9) et est positionnée dans l'échancrure (9).

12. Ensemble de filtration selon la revendication 10 ou 11, **caractérisé en ce que**
l'unité électronique (20) est réalisée sous forme d'une unité d'ionisation, d'une unité de détection ou d'une unité de régulation de température.
